# FASCICULE DE BREVET EUROPEEN

(11) **EP 1 146 251 B1**
(45) Date de publication et mention de la délivrance du brevet: **19.10.2005**
(21) Numéro de dépôt: 01440102.0
(22) Date de dépôt: 11.04.2001
(51) Int. Cl.: F16G 11/04, F16G 11/10, A41F 1/00, A41C 3/02

(54) **Dispositif de réglage de l'écartement des bonnets d'un soutien-gorge**
Abstandeinstellvorrichtung der Körbchen eines Büstenhalter
Device for adjusting the distance of brassiere cups

(30) Priorité: 14.04.2000 FR 0004855
(43) Date de publication de la demande: 17.10.2001
(73) Titulaire: Sara Lee Corporation, Winston-Salem, NC 27105 (US)
(72) Inventeur: Mathieu, Michel, 38300 Bourgoin Jallieu (FR); Girard, P., 38300 St Savin (FR)
(74) Mandataire: Littolff, Denis

(56) Documents cités:
- FR-A- 2 661 804
- GB-A- 365 977
- GB-A- 576 522
- US-A- 4 102 019
- US-A- 4 156 574
- US-A- 5 433 648
- US-B1- 6 185 798

## Description

La présente invention concerne un dispositif de réglage de l'écartement de bonnets d'un soutien-gorge, disposé entre lesdits bonnets au voisinage de leurs extrémités latérales internes, et permettant d'une part l'adaptation du soutien-gorge à l'entre sein de chaque utilisatrice, et d'autre part le réglage de la position des seins par ajustement de la tension entre les bonnets.

Le besoin d'un réglage d'adaptation à la distance entre les seins découle notamment de la tendance générale à mettre en avant le droit de chacun à un certain confort, tendance qui se manifeste dans ce domaine par une propension à ne plus considérer le soutien-gorge uniquement comme un sous-vêtement visant à mettre en valeur la forme des seins, mais également comme un élément personnel de confort, adaptable à ce titre et dans la mesure du possible à la physiologie de l'utilisatrice, et à son confort du moment.

La mise en valeur de la poitrine peut d'ailleurs être soumise à des variations au cours de la journée, notamment fonction des vêtements portés sur le soutien-gorge, ou de l'apparence que l'utilisatrice veut offrir d'elle-même dans un contexte social donné. Plus généralement, le volume des seins peut changer d'un jour à l'autre chez certaines femmes, par exemple à cause de problèmes de rétention d'eau, et nécessiter des ajustements correspondants du soutien-gorge. Enfin, de tels ajustements peuvent être une réponse en terme de confort à des différences de sensibilité des seins.

L'apparition de soutiens-gorge du type commercialisé sous la marque "Wonderbra" créés pour mettre en valeur la poitrine des femmes en rehaussant les seins d'une part, et en les rapprochant l'un de l'autre d'autre part pour obtenir un effet dit "pigeonnant", a de plus contribué à la recherche d'une solution de confort telle que la propose l'invention. En effet, le port du soutien-gorge en position relevée et rapprochée des seins, procurant un effet esthétique indéniable notamment pour les petits seins, comprime et contraint par ailleurs lesdits seins d'une façon qui peut rapidement occasionner une gêne, voire s'avérer assez désagréable au bout d'un certain temps.

Il est donc utile de prévoir que la tension à imprimer aux bonnets pour la réalisation de cet effet puisse être relâchée sans délais lorsque l'utilisatrice veut reposer ses seins, par exemple lorsqu'une réception est finie. De même, l'existence d'un réglage peut permettre d'utiliser un même soutien-gorge pour deux "fonctions" sociales différentes, par exemple pour une femme enchaînant une réception dans laquelle la position rehaussée est désirée, après une journée de travail au cours de laquelle un soutien-gorge traditionnel est suffisant. Le réglage de la distance ou de la tension de l'entre sein permettra alors de gagner du temps, sans qu'il soit nécessaire de procéder à un changement de soutien-gorge, ce qui peut s'avérer appréciable pour certaines utilisatrices passant pratiquement sans transition d'une situation à une autre.

Il importe cependant de souligner que cette possibilité de réglage n'est pas réservée à des modèles de soutiens-gorge particuliers, mais peut être généralisée pour le plus grand confort des utilisatrices. Toutes les possibilités d'adaptation de ces sous-vêtements aux morphologies infiniment variées des utilisatrices et de leurs seins sont en effet utiles.

Le dispositif de réglage de la présente invention, permettant comme on l'a mentionné auparavant d'ajuster la distance entre les bonnets, comporte des moyens pour le passage et le guidage de deux cordons consistant en au moins un conduit, lesdits cordons étant fixés chacun à une extrémité latérale interne d'un des bonnets.

Un système de réglage disposé entre les bonnets d'un soutien-gorge et permettant de faire varier leur position à l'aide de cordons est déjà divulgué dans le document US-A-5 433 648. Ce système est notamment constitué d'un tambour rotatif actionné dans un sens par un mécanisme à rochets, et auquel les cordons sont fixés symétriquement. La commande de la position des bonnets n'est dès lors pas individualisable.

Dans la solution de l'invention, chaque cordon est accessible en amont et en aval du dispositif de réglage, et des moyens de blocage / déblocage permettent un réglage individuel de la longueur de cordon s'étendant entre ladite extrémité latérale interne du bonnet et le dispositif de réglage, lesdits moyens de blocage /déblocage pouvant être activés par des moyens de commande accessibles par l'utilisateur entre les bonnets.

Ce dispositif est donc mis en oeuvre avec des cordons équipant les côtés intérieurs des bonnets, et qui sont eux-mêmes manipulables, en amont et en aval du dispositif de réglage proprement dit, pour effectuer le réglage.

Il s'agit ensuite de bloquer les cordons pour que la longueur choisie entre les bonnets soit optimalement adaptée au confort de l'utilisatrice.

Il y a donc deux niveaux de commande qui doivent également être accessibles : la commande des cordons, réalisée par une manipulation en amont ou en aval du dispositif, et qui règle la distance entre bonnets, et la commande du blocage /déblocage des cordons, qui précède d'ailleurs chronologiquement la première citée.

L'invention est définie par un dispositif selon la revendication 1.

La réalisation du blocage / déblocage par un bouton situé à l'une des extrémités de la tige mobile implique que la section des cordons ne diffère pas sensiblement de celle des conduits, au moins sur une partie du trajet. En d'autres termes, les cordons doivent de préférence s'ajuster sans trop de jeu dans au moins la portion du conduit, dans laquelle a lieu l'obstruction provoquée par l'excroissance de la tige.

De préférence, ledit bouton de commande est situé à la partie supérieure du dispositif de réglage, à un niveau voisin de celui des extrémités latérales des bonnets.

Il est dès lors aisément accessible par l'utilisatrice, qui peut provoquer le déblocage en vue de changer le réglage à volonté, ledit changement étant ensuite très rapidement effectué.

De préférence encore, le dispositif de l'invention comporte deux conduits distincts dotés d'une ouverture supérieure pour l'entrée du cordon et d'une ouverture inférieure pour la sortie de celui-ci, la séparation entre les deux conduits étant réalisée par un organe central d'allure verticale, le guidage étant obtenu par association entre ledit organe central, des parois latérales joignant les ouvertures supérieure et inférieure, et des parois frontale et dorsale.

La séparation autorise l'individualisation du réglage par les cordons.

Selon une possibilité optionnelle, les moyens de blocage / déblocage peuvent comporter des moyens de rappel en la position de blocage des cordons dans leur conduit.

Les deux mains sont alors nécessaires à la manipulation et au réglage des cordons, mais la réalisation d'un blocage correct est garantie dans tous les cas.

Dans toutes les configurations, le dispositif de réglage de l'invention comporte au moins une butée limitant le mouvement de la tige lors de l'établissement du déblocage de chaque cordon par translation de la tige vers ladite butée en vue de libérer le volume de chaque conduit. Il est en effet fonctionnellement nécessaire de limiter le déplacement rectiligne de la tige de blocage / déblocage, afin de pouvoir assurer dans de bonnes conditions cette dernière fonction.

Jusqu'ici, la localisation précise desdits moyens de blocage / déblocage n'a pas été précisée, ni leur nombre. Ainsi, il est tout à fait possible que chaque conduit intègre des moyens spécifiques répondant aux caractéristiques techniques précitées, et permettant l'individualisation du réglage de chaque cordon.

De préférence, toutefois, l'organe central de séparation des deux conduits consiste en une tige comportant lesdits moyens de blocage / déblocage opérant simultanément pour les deux conduits. Cet organe central réalise alors deux fonctions : la séparation des conduits, et le blocage / déblocage.

Il ne subsiste alors qu'un système de blocage / déblocage, centré par rapport aux conduits, permettant cependant d'individualiser le réglage de la position de chaque cordon, car ils restent séparés et manipulable séparément.

Selon une configuration particulièrement avantageuse, le dispositif de réglage de l'invention est constituée de deux plaques planes parallèles séparées d'une part par deux parois latérales formant un angle aigu avec l'axe de l'organe central, et d'autre part par deux parois supérieure et inférieure d'allure horizontale délimitant d'une part avec les parois latérales les ouvertures supérieure et inférieure des conduits, et coopérant d'autre part avec les moyens de blocage / déblocage pour leur permettre de prendre leur position respectivement de blocage et de déblocage.

On retrouve dans cette forme la délimitation de chaque conduit sur quatre côtés, la partie centrale étant mobile et réalisant en outre les moyens de blocage /déblocage.

Plus précisément, dans cette configuration, les extrémités latérales de la paroi supérieure surmontent les extrémités supérieures des parois latérales, créant des ouvertures supérieures des conduits orientées latéralement. De même, selon une possibilité, les extrémités inférieures des parois latérales sont sensiblement au même niveau que les extrémités latérales de la paroi inférieure, créant des ouvertures inférieures des conduits orientées vers le bas.

Cette disposition relative des orifices d'extrémité des conduits traduit en fait une adaptation à orientation naturelle des cordons, qui présentent en amont du dispositif une orientation sensiblement horizontale, alors que leur poids les rend approximativement verticaux après la sortie dudit dispositif, bien qu'en sortie proprement dite, leur orientation dépende de l'angle de sortie du conduit.

Le tronçon amont est fonctionnellement d'allure horizontale car c'est la partie qui réalise à titre principal la tension entre les bonnets : en l'absence du dispositif de réglage de l'invention, un seul cordon ou équivalent relierait lesdits bonnets, suivant un axe d'allure horizontale. La fonction subsiste, améliorée, et l'orientation ne change pas.

Toutefois, il est à noter que le dispositif de invention permet également l'exercice de forces latérales s'appliquant à la bordure interne des bonnets, qui affectent l'équilibre général de ces derniers et permettent d'améliorer la mise en forme des seins, en combinaison avec d'autres forces s'appliquant sur la périphérie de chaque bonnet, dues par exemple aux bretelles ou aux attaches latérales.

La paroi supérieure telle que définie auparavant peut comporter un orifice de passage pour les moyens de blocage / déblocage, et sert de butée pour les moyens de commande desdits moyens de blocage / déblocage des cordons. La paroi inférieure peut également servir de butée pour l'extrémité inférieure desdits moyens.

Ces parois, outre qu'elles participent à la délimitation du volume des conduits, coopèrent donc de préférence également avec les moyens de blocage /déblocage des cordons.

En fait, dans les variantes de forme préférentielles, le dispositif de la présente invention présente de préférence encore une symétrie par rapport à un plan vertical passant par le milieu des parois supérieure et inférieure, et perpendiculaire aux plaques planes.

L'invention va à présent être décrite plus en détail en référence aux dessins qui sont présentés en annexe, pour lesquels :
- la figure 1 est une vue en élévation de face d'un des deux éléments, formant la pièce principale du dispositif de réglage de l'invention ;
- la figure 2 en est une vue de côté ;
- les figures 3 et 4 montrent, selon les mêmes orientations de vues que précédemment, le second élément de ladite pièce principale ;
- les figures 5 et 6 illustrent, avec encore les mêmes orientations de vues qu'auparavant, les moyens mobiles de blocage / déblocage des cordons ;
- les figures 7 et 8 montrent les positions de blocage / déblocage desdits moyens dans le premier élément ;
- la figure 9 représente une vue de face d'un dispositif de réglage de l'invention disposé entre les deux bonnets (partiellement représentés) d'un soutien-gorge ; et
- les figures 10 à 12 montrent une configuration dans laquelle chaque conduit comporte des moyens de blocage / déblocage.

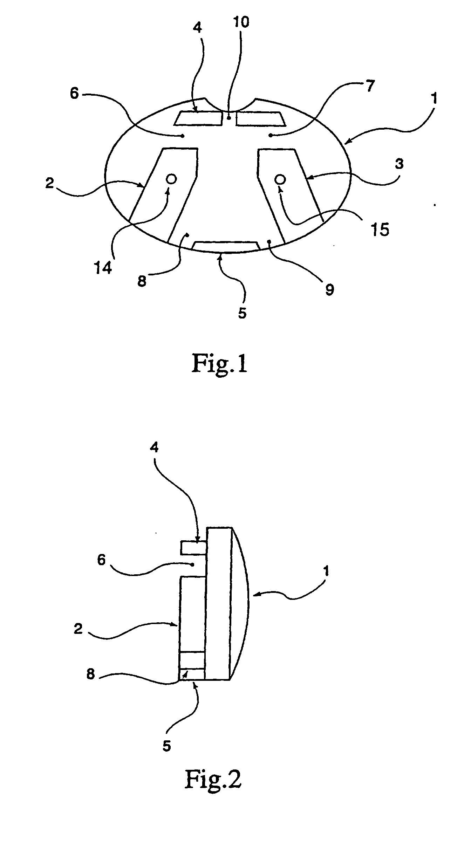

En référence à la figure 1, une plaque (1) comporte sur l'une de ses grandes faces planes des excroissances destinées notamment à constituer les parois des conduits. Ainsi, deux parois latérales (2, 3) forment les parois externes desdits conduits, alors que deux parois respectivement supérieure (4) et inférieure (5) délimitent notamment les orifices d'entrée (6, 7) et de sortie (8, 9) des cordons.

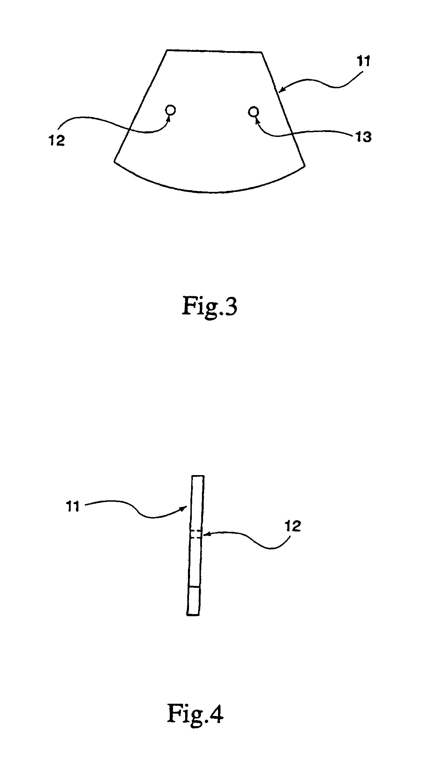

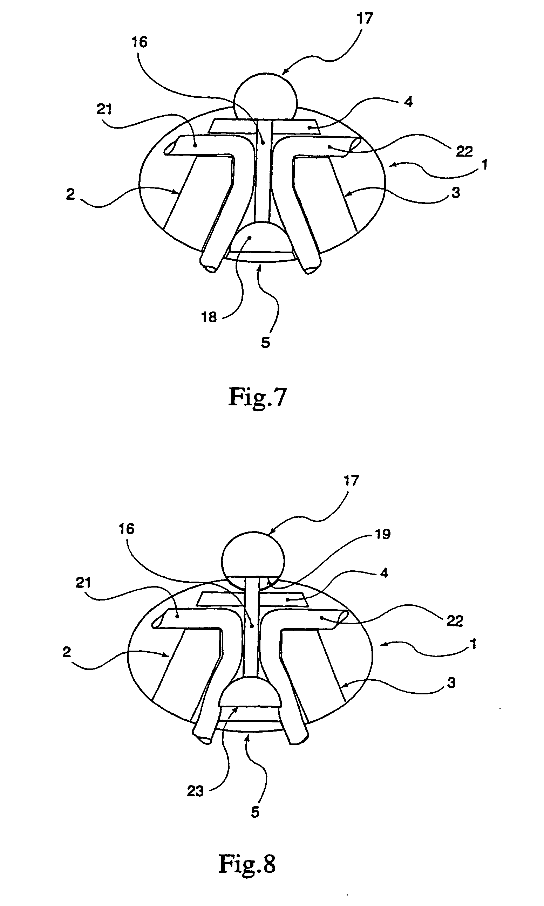

La paroi supérieure (4) comprend un passage (10) pour les moyens de blocage / déblocage (voir figures 7 et 8). Comme cela apparaît en figure 2, toutes les parois (2, 3, 4, 5) précitées ont la même hauteur, de sorte que l'on peut y fixer une plaque (11) telle que celle qui est représentée en figures 3 et 4. La découpe extérieure de cette dernière plaque (11) peut prendre des formes variées, mais elle doit au minimum recouvrir le périmètre délimité par les parois (2, 3, 4, 5) afin de constituer des conduits complets sur quatre faces pour les cordons.

Cette plaque (11) est par exemple munie d'orifices (12, 13) de fixation, qui correspondent avec des orifices (14, 15) pratiqués dans les parois latérales (2, 3), aux fins d'insertion d'un arbre, goujon, vis ou équivalent de solidarisation d'un élément (1) sur l'autre (11).

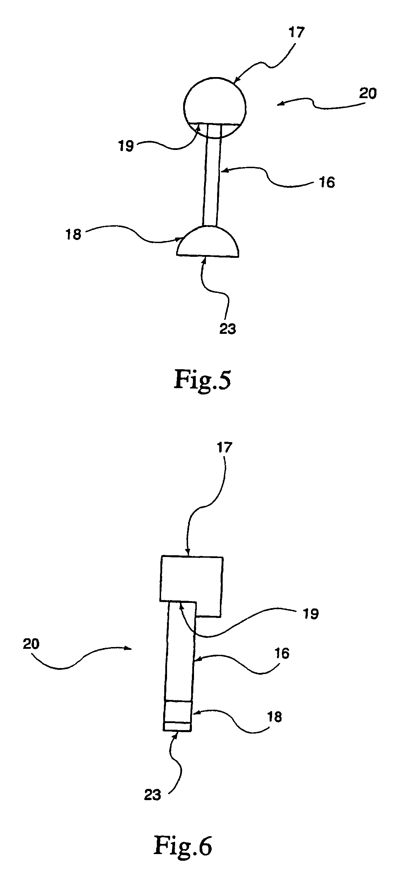

En référence aux figures 5 et 6, les moyens ou l'organe (20) de blocage /déblocage sont constitués d'une tige (16) limitée à l'une de ses extrémités par un bouton (17) de manipulation, et à la seconde extrémité par une tête (18) d'allure hémicylindrique provoquant plus particulièrement le blocage / déblocage de chaque cordon (21, 22). Le bouton (17) de manipulation est par exemple constitué d'un corps d'allure cylindrique, dont une partie est tronquée pour former une surface formant butée (19) d'appui sur la paroi supérieure (4). La tige (16) est en effet prévue pour se déplacer dans le passage (10), comme cela apparaît dans les figures 7 et 8.

En figure 7, la position de l'organe (20) est telle que les cordons (21, 22) ne sont pas bloqués. La surface (19) est dans ce cas en appui sur la paroi supérieure (4), et la surface (23) limitant la tête hémicylindrique est en appui sur la paroi inférieure (5). Ladite forme arrondie permet de dégager dans cette position les ouvertures inférieures (8, 9), et les conduits ne sont alors pas obstrués.

En figure 8, au contraire, la tête (18) est remontée et, vu l'inclinaison des parois (2, 3), les extrémités latérales de ladite tête (18) obstruent partiellement les conduits, et bloquent les cordons (21, 22). Les surfaces précitées (19, 23) ne sont alors plus en appui.

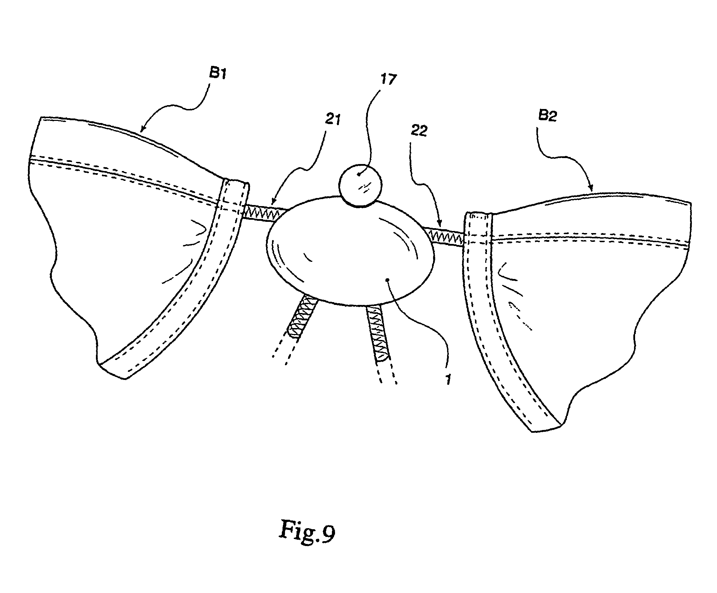

Sur un plan général, la figure 9 montre la disposition du dispositif de l'invention entre les bonnets (B1, B2), et l'orientation des tronçons des cordons (21, 22) situés respectivement en amont et en aval dudit dispositif. Les portions amont sont sensiblement horizontales, alors que les portions aval sont globalement verticales.

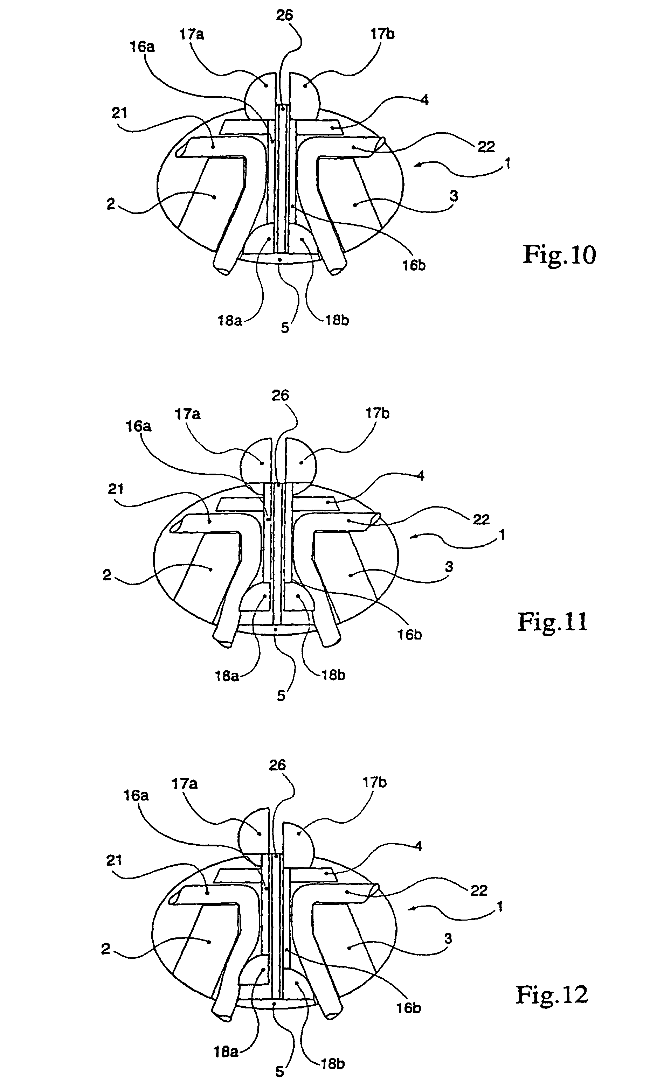

Les figures 10 à 12 représentent une variante dans laquelle chaque conduit comporte des moyens de blocage / déblocage du même type que dans la variante décrite jusqu'ici. Le principe de fonctionnement est globalement le même que précédemment, avec deux tiges (16a, 16b) limitées à leurs extrémités respectives par des boutons (17a, 17b) de manipulation en partie haute, et des têtes (18a, 18b) en partie basse. Leurs formes sont notamment prévues pour s'adapter à une cloison (26) fixe délimitant les deux conduits, contre laquelle coulissent lesdites tiges (16a, 16b) et leurs éléments d'extrémité.

Le fonctionnement, bien qu'individualisé à chaque conduit, est strictement le même qu'auparavant, ainsi qu'en témoignent ces figures : en figure 10, les cordons (21, 22) ne sont pas bloqués, alors qu'ils le sont tous les deux en figure 11, et que l'un des deux (21) seulement l'est en figure 12.

La description qui précède ne concerne bien entendu qu'un exemple particulier de l'invention, qui n'est pas réduite à cette configuration. Elle englobe au contraire toutes les variantes de forme, de configuration, de mise en oeuvre qui entrent dans le domaine des compétences de l'homme de l'art.

## Revendications

1. Dispositif de réglage de l'écartement des bonnets (B1, B2) d'un soutien-gorge, disposé entre lesdits bonnets (B1, B2) au voisinage de leurs extrémités latérales internes, comportant des moyens pour le passage et le guidage de deux cordons (21, 22) consistant en au moins un conduit associé à chaque cordon, **caractérisé en ce que** lesdits cordons (21, 22) sont fixés chacun à une extrémité latérale interne d'un des bonnets (B1, B2), de telle sorte qu'ils soient accessibles en amont et en aval du dispositif de réglage, **en ce que** des moyens de blocage / déblocage permettent un réglage individuel de la longueur de cordon (21, 22) s'étendant entre ladite extrémité latérale interne du bonnet (B1, B2) et le dispositif de réglage, lesdits moyens de blocage / déblocage pouvant être activés par des moyens de commande accessibles par l'utilisateur entre les bonnets (B1, B2), **en ce que** les moyens de blocage / déblocage consistent en une tige (16, 16a,16b) contiguë à chaque conduit, mobile en translation rectiligne selon un axe d'allure verticale entre deux positions stables, et munie à l'une de ses extrémités d'une excroissance (18, 18a, 18b) orientée de telle sorte qu'elle obstrue partiellement le conduit lorsque la tige (16, 16a, 16b) mobile est déplacée vers l'une de ses positions stables, et libère le volume dudit conduit dans l'autre desdites positions stables et **en ce que** les moyens de commande des moyens de blocage / déblocage consistent en un bouton (17, 17a, 17b) situé à l'une des extrémités de la tige (16, 16a, 16b) mobile et permet la manipulation de ladite tige (16, 16a, 16b).

2. Dispositif de réglage de l'écartement des bonnets (B1, B2) d'un soutien-gorge selon la revendication précédente, **caractérisé en ce qu'**il comporte deux conduits distincts dotés d'une ouverture supérieure (6, 7) pour l'entrée du cordon (21, 22) et d'une ouverture inférieure (8, 9) pour la sortie de celui-ci, la séparation entre les deux conduits étant réalisée par un organe central (16, 26) d'allure verticale, le guidage étant obtenu par association entre ledit organe central (16, 26) et d'une part des parois latérales (2, 3) joignant les ouvertures supérieure (6, 7) et inférieure (8, 9), et d'autre part des parois frontale (1) et dorsale (11).

3. Dispositif de réglage de l'écartement des bonnets (B1, B2) d'un soutien-gorge selon l'une quelconque des revendications précédentes, **caractérisé en ce que** les moyens de blocage / déblocage comportent des moyens de rappel en la position de blocage des cordons (21, 22) dans leur conduit.

4. Dispositif de réglage de l'écartement des bonnets (B1, B2) d'un soutien-gorge selon l'une des revendications précédentes, **caractérisé en ce que** ledit bouton (17, 17a, 17b) est situé à la partie supérieure du dispositif de réglage, à un niveau voisin de celui des extrémités latérales des bonnets (B1, B2).

5. Dispositif de réglage de l'écartement des bonnets (B1, B2) d'un soutien-gorge selon l'une quelconque des revendications précédentes, **caractérisé en ce qu'**il comporte au moins une butée (5) limitant le mouvement de la tige (16, 16a, 16b) lors de l'établissement du déblocage de chaque cordon (21, 22) par translation de la tige (16, 16a, 16b) vers ladite butée (5) en vue de libérer le volume de chaque conduit.

6. Dispositif de réglage de l'écartement des bonnets (B1, B2) d'un soutien-gorge selon l'une des revendications 2 à 5, **caractérisé en ce que** l'organe central (16) de séparation des deux conduits consiste en une tige comportant les moyens de blocage / déblocage opérant simultanément pour les deux conduits.

7. Dispositif de réglage de l'écartement des bonnets (B1, B2) d'un soutien-gorge selon l'une des revendications précédentes, **caractérisé en ce qu'**il est constitué de deux plaques (1, 11) planes parallèles séparées d'une part par deux parois latérales (2, 3) formant un angle aigu avec l'axe de l'organe central, et d'autre part par deux parois supérieure (4) et inférieure (5) d'allure horizontale délimitant d'une part avec les parois latérales (2, 3) les ouvertures supérieure (6, 7) et inférieure (8, 9) des conduits, et coopérant d'autre part avec les moyens de blocage /déblocage pour leur permettre de prendre leur position respectivement de blocage et de déblocage.

8. Dispositif de réglage de l'écartement des bonnets (B1, B2) d'un soutien-gorge selon la revendication précédente, **caractérisé en ce que** les extrémités latérales de la paroi supérieure (4) surmontent les extrémités supérieures des parois latérales (2, 3), créant des ouvertures supérieures (6, 7) des conduits orientées latéralement.

9. Dispositif de réglage de l'écartement des bonnets (B1, B2) d'un soutien-gorge selon l'une des revendications 7 et 8, **caractérisé en ce que** les extrémités inférieures des parois latérales (2, 3) sont sensiblement au même niveau que les extrémités latérales de la paroi inférieure (5), créant des ouvertures inférieures (8, 9) des conduits orientés vers le bas.

10. Dispositif de réglage de l'écartement des bonnets (B1, B2) d'un soutien-gorge selon l'une des revendications 7 à 9, **caractérisé en ce que** la paroi supérieure (4) comporte un orifice (10) de passage pour les moyens de blocage / déblocage, et sert de butée pour les moyens de commande (17) desdits moyens de blocage /déblocage des cordons (21, 22).

11. Dispositif de réglage de l'écartement des bonnets (B1, B2) d'un soutien-gorge selon l'une des revendications 7 à 10, **caractérisé en ce que** la paroi inférieure (5) sert de butée pour l'extrémité inférieure des moyens de blocage / déblocage des cordons (21, 22).

12. Dispositif de réglage de l'écartement des bonnets (B1, B2) d'un soutien-gorge selon l'une quelconque des revendications 7 à 11, **caractérisé en ce qu'**il présente une symétrie par rapport à un plan vertical passant par le milieu des parois supérieure (4) et inférieure (5), et perpendiculaire aux plaques planes (1, 11).

## Patentansprüche

1. Abstandseinstellungsvorrichtung der Körbchen (B1, B2) eines Büstenhalters, die zwischen den Körbchen (B1, B2) benachbart zu deren seitlichen, inneren Enden angeordnet ist, umfassend Mittel für den Durchgang und die Führung der zwei Bänder (21, 22), bestehend aus mindestens einer Anordnung, die zu jedem Band verbunden ist, **dadurch gekennzeichnet, dass** jedes der Bänder (21, 22) an ein seitliches, inneres Ende von einem der Körbchen (B1, B2) derart festgemacht ist, dass sie oberhalb und unterhalb der Einstellungsvorrichtung zugänglich sind, indem Mittel des Verschließens / Öffnens eine individuelle Einstellung der Länge des Bandes (21, 22) erlauben, das sich zwischen dem seitlichen, inneren Ende des Körbchens (B1, B2) und der Einstellungsvorrichtung erstreckt, wobei die Mittel des Verschließens / Öffnens durch Betätigungsmittel ausgelöst werden können, die durch den Benutzer zwischen den Körbchen (B1, B2) zugänglich sind, indem die Mittel des Verschließens / Öffnens aus einem Schaft (16, 16a, 16b) bestehen, der zu jeder Anordnung benachbart ist, die beweglich in geradliniger Verschiebung entlang einer vertikalen Verlaufsachse zwischen zwei festen Positionen ist, und zu einem seiner Enden durch eine Ausformung (18, 18a, 18b) versehen ist, die derart ausgerichtet ist, dass sie teilweise die Anordnung blockiert, wenn der mobile Schaft (16, 16a, 16b) gegen eine seiner festen Positionen verschoben wird, und macht den Raum der Anordnung in die andere der festen Positionen frei, und wobei die Betätigungsmittel der Mittel des Verschließens / Öffnens aus einem Druckknopf (17, 17a, 17b) bestehen, der an einem der Enden des mobilen Schafts (16, 16a, 16b) angeordnet ist und die Handhabung des Schaftes (16, 16a, 16b) erlaubt.

2. Abstandseinstellungsvorrichtung der Körbchen (B1, B2) eines Büstenhalters gemäß dem vorstehenden Anspruch, **dadurch gekennzeichnet, dass** sie zwei verschieden ausgestattete Anordnungen einer oberen Öffnung (6, 7) für die Zuführung des Bandes (21, 22) und einer unteren Öffnung (8, 9) für den Austritt von diesem aufweist, wobei die Trennung zwischen den zwei Anordnungen durch eine mittlere Vorrichtung (16, 26) des vertikalen Verlaufs durchgeführt wird, wobei die Führung durch Verbindung zwischen der mittleren Vorrichtung (16, 26) und eines Teils der seitlichen Wände (2, 3), die benachbart zu den oberen (6, 7) und unteren (8, 9) Öffnungen sind, und eines anderen Teils der Vorder- (1) und Rückwand (11) erreicht wird.

3. Abstandseinstellungsvorrichtung der Körbchen (B1, B2) eines Büstenhalters gemäß irgendeinem der vorstehenden Ansprüche, **dadurch gekennzeichnet, dass** die Mittel des Verschließens / Öffnens in ihrer Anordnung Rückstellungsmittel in der Position des Verschließens der Bänder (21, 22) umfassen.

4. Abstandseinstellungsvorrichtung der Körbchen (B1, B2) eines Büstenhalters gemäß einem der vorstehenden Ansprüche, **dadurch gekennzeichnet, dass** der Druckknopf (17, 17a, 17b) auf dem oberen Teil der Einstellungsvorrichtung auf einer Höhe angeordnet ist, die benachbart zu jener der seitlichen Enden der Körbchen (B1, B2) ist.

5. Abstandseinstellungsvorrichtung der Körbchen (B1, B2) eines Büstenhalters gemäß irgendeinem der vorstehenden Ansprüche, **dadurch gekennzeichnet, dass** sie mindestens einen Begrenzer (5) umfasst, der die Bewegung des Schaftes (16, 16a, 16b) bei Einstellung des Öffnens jedes Bandes (21, 22) durch Verschiebung des Schaftes (16, 16a, 16b) zu dem Begrenzer (5), im Hinblick auf das Freimachen des Raumes jeder Anordnung beschränkt.

6. Abstandseinstellungsvorrichtung der Körbchen (B1, B2) eines Büstenhalters gemäß einem der Ansprüche 2 bis 5, **dadurch gekennzeichnet, dass** die mittlere Trennvorrichtung (16) der zwei Anordnungen aus einem Schaft besteht, der die Mittel des Verschließens /Öffnens umfasst, die gleichzeitig für die zwei Anordnungen wirksam werden.

7. Abstandseinstellungsvorrichtung der Körbchen (B1, B2) eines Büstenhalters gemäß einem der vorstehenden Ansprüche, **dadurch gekennzeichnet, dass** sie sich aus zwei planparallelen Platten (1, 11) zusammensetzt, die einerseits durch zwei seitliche Wände (2, 3) getrennt sind, die einen rechten Winkel mit der Achse der mittleren Vorrichtung bilden, und andererseits bestimmen zwei obere (4) und untere (5) Wände des horizontalen Verlaufs einerseits die seitlichen Wände (2, 3), die oberen (6, 7) und unteren (8, 9) Öffnungen der Vorrichtungen und wirken andererseits mit den Mitteln des Verschließens / Öffnens zusammen, um ihnen zu erlauben, ihre entsprechende Position des Verschließens und des Öffnens einzunehmen.

8. Abstandseinstellungsvorrichtung der Körbchen (B1, B2) eines Büstenhalters gemäß dem vorstehenden Anspruch, **dadurch gekennzeichnet, dass** die seitlichen Enden der oberen Wand (4) die oberen Enden der unteren Wände (2, 3) überragen, wobei obere Öffnungen (6, 7) der seitlich ausgerichteten Anordnungen gebildet werden.

9. Abstandseinstellungsvorrichtung der Körbchen (B1, B2) eines Büstenhalters gemäß einem der Ansprüche 7 und 8, **dadurch gekennzeichnet, dass** die unteren Enden der seitlichen Wände (2, 3) merklich auf der gleichen Höhe wie die seitlichen Enden der unteren Wand (5) sind, wobei untere Öffnungen (8, 9) der Anordnungen gebildet werden, die nach unten ausgerichtet sind.

10. Abstandseinstellungsvorrichtung der Körbchen (B1, B2) eines Büstenhalters gemäß einem der Ansprüche 7 bis 9, **dadurch gekennzeichnet, dass** die obere Wand (4) eine Durchgangsöffnung (10) für die Mittel des Verschließens / Öffnens aufweist, und wobei der Begrenzer für die Betätigungsmittel (17) der Mittel des Verschließens / Öffnens der Bänder (21, 22) eingesetzt wird.

11. Abstandseinstellungsvorrichtung der Körbchen (B1, B2) eines Büstenhalters gemäß einem der Ansprüche 7 bis 10, **dadurch gekennzeichnet, dass** die untere Wand (5) als Begrenzer für das untere Ende der Mittel des Verschließens / Öffnens der Bänder (21, 22) eingesetzt wird.

12. Abstandseinstellungsvorrichtung der Körbchen (B1, B2) eines Büstenhalters gemäß einem der Ansprüche 7 bis 11, **dadurch gekennzeichnet, dass** sie eine Symmetrie bezüglich einer vertikalen Ebene aufweist, die durch die Mitte der oberen (4) und unteren (5) Wand und senkrecht zu den ebenen Platten (1, 11) verläuft.

## Claims

1. Device for adjusting the distance between cups (B1, B2) of a brassiere, disposed between said cups (B1, B2) in the vicinity of their inner lateral ends, having means for threading and guiding two cords (21, 22) comprising at least one passage co-operating with each cord, **characterised in that** said cords (21, 22) are affixed each to an inner lateral end of one of the cups (B1, B2) so that they are accessible upstream and downstream of the adjusting device, **in that** locking / releasing means enable the length of cord (21, 22) extending between said inner lateral end of the cup (B1, B2) and the adjusting device to be individually adjusted, which locking / releasing means can be activated by control means between the cups (B1, B2) accessible by the user, **in that** the locking / releasing means consist of a stem (16, 16a, 16b) contiguous with each passage, displaceable in translation in a straight line along a vertically oriented axis between two stable positions and provided at one of its ends with a protuberance (18, 18a, 18b) oriented so that it partially obstructs the passage as the displaceable stem (16, 16a, 16b) is being displaced towards one of its stable positions and releases the volume of said passage in the other of said stable positions, and **in that** the control means of the locking / releasing means consist of a button (17, 17a, 17b) disposed at one of the ends of the displaceable stem (16, 16a, 16b) and enable said stem (16, 16a, 16b) to be manipulated.

2. Device for adjusting the distance between cups (B1, B2) of a brassiere as claimed in the preceding claim, **characterised in that** it has two separate passages with a top opening (6, 7) for inserting the cord (21, 22) and a bottom opening (8, 9) from which the latter emerges, the two passages being separated by a vertically oriented central element (16, 26), the guiding action being effected due to the cooperation between said central element (16, 26) and the side walls (2, 3) joining the top (6, 7) and bottom (8, 9) openings, on the one hand, and the front (1) and rear (11) walls, on the other hand.

3. Device for adjusting the distance between cups (B1, B2) of a brassiere as claimed in any one of the preceding claims, **characterised in that** the locking / releasing means have means for returning the cords (21, 22) to their locking position in their passage.

4. Device for adjusting the distance between cups (B1, B2) of a brassiere as claimed in one of the preceding claims, **characterised in that** said button (17, 17a, 17b) is disposed at the top part of the adjusting device on a level close to that of the lateral ends of the cups (B1, B2).

5. Device for adjusting the distance between cups (B1, B2) of a brassiere as claimed in any one of the preceding claims, **characterised in that** it has at least one stop (5) restricting the movement of the stem (16, 16a, 16b) when each cord (21, 22) is being released by the translating motion of the stem (16, 16a, 16b) towards said stop (5) with a view to freeing the volume of each passage.

6. Device for adjusting the distance between cups (B1, B2) of a brassiere as claimed in one of claims 2 to 5, **characterised in that** the central element (16) separating the two passages consists of a stem with locking / releasing means for the two passages which operate simultaneously.

7. Device for adjusting the distance between cups (B1, B2) of a brassiere as claimed in one of the preceding claims, **characterised in that** it has two parallel, flat plates (1, 11) separated, on the one hand, by two side walls (2, 3) subtending an acute angle with the axis of the central element and, on the other hand, by two horizontally oriented top (4) and bottom (5) walls which bound the top (6, 7) and bottom (8, 9) walls of the passages in conjunction with the side walls (2, 3), on the one hand, and co-operate with the locking / releasing means to allow them to assume their locking and releasing position respectively, on the other hand.

8. Device for adjusting the distance between cups (B1, B2) of a brassiere as claimed in the preceding claim, **characterised in that** the lateral ends of the top wall (4) surmount top ends of the side walls (2, 3) creating top openings (6, 7) of the laterally oriented passages.

9. Device for adjusting the distance between cups (B1, B2) of a brassiere as claimed in one of claims 7 and 8, **characterised in that** the bottom ends of the side walls (2, 3) are disposed substantially on the same level as the side ends of the bottom wall (5), creating bottom openings (8, 9) of the downwardly oriented passages.

10. Device for adjusting the distance between cups (B1, B2) of a brassiere as claimed in one of claims 7 to 9, **characterised in that** the top wall (4) has an orifice (10) providing a passage for locking /releasing means and serving as a stop for the control means (17) of said locking / releasing means of the cords (21, 22).

11. Device for adjusting the distance between cups (B1, B2) of a brassiere as claimed in one of claims 7 to 10, **characterised in that** the bottom wall (5) serves as a stop for the end of the locking /releasing means of the cords (21, 22).

12. Device for adjusting the distance between cups (B1, B2) of a brassiere as claimed in any one of claims 7 to 11, **characterised in that** it has a symmetry relative to a vertical plane intersecting the middle of the top (4) and bottom (5) walls and perpendicular to the flat plates (1, 11).
